# EUROPEAN PATENT SPECIFICATION

(11) **EP 3 032 489 B1**
(45) Date of publication and mention of the grant of the patent: **21.11.2018**
(21) Application number: 14833992.2
(22) Date of filing: 04.08.2014
(51) Int. Cl.: H02J 3/00, H02J 3/32, G05B 15/02, G05F 1/66, G06Q 20/14, G06Q 30/06, G06Q 10/06, G06Q 50/06

(54) **POWER ADJUSTMENT DEVICE, POWER ADJUSTMENT METHOD, AND PROGRAM**
LEISTUNGSEINSTELLUNGSVORRICHTUNG, LEISTUNGSEINSTELLUNGSVERFAHREN UND PROGRAMM
DISPOSITIF DE RÉGLAGE DE PUISSANCE, PROCÉDÉ DE RÉGLAGE DE PUISSANCE ET PROGRAMME

(30) Priority: 09.08.2013 JP 2013166525
(43) Date of publication of application: 15.06.2016
(73) Proprietor: Panasonic Intellectual Property Management Co., Ltd., Osaka-shi, Osaka 540-6207 (JP)
(72) Inventor: TOKUNAGA, Yoshihiko, Osaka 540-6207 (JP); MIYAZAKI, Seiichi, Osaka 540-6207 (JP); FUKUDA, Naohiro, Osaka 540-6207 (JP); KURIYAMA, Hiroyuki, Osaka 540-6207 (JP); OTA, Norimasa, Osaka 540-6207 (JP)
(74) Representative: Appelt, Christian W.
(86) International application number: PCT/JP2014/004075
(87) International publication number: WO 2015/019599

(56) References cited:
- EP-A1- 2 535 999
- WO-A1-2012/057119
- CA-A1- 2 860 743
- JP-A- 2000 224 769
- JP-A- 2004 023 914
- JP-A- 2004 336 890
- JP-A- 2006 158 146
- JP-A- 2006 352 933
- JP-A- 2008 021 152
- JP-A- 2011 087 383
- US-A1- 2010 306 027
- US-A1- 2012 323 386

## Description

### TECHNICAL FIELD

The present invention relates to a power adjustment system that is configured to supply electric power to an electric power system from a power supply facility in a building of a consumer, a power adjustment method for the power adjustment system, and a program that enables the power adjustment system.

### BACKGROUND ART

Conventionally, the technology has been known, which enables to supply electric power of a storage battery to the both of an electric power system and an electric load (JP 2000-224769 A, hereinafter referred to as "Document 1"). Document 1 discloses that a consumer can acquire a profit equivalent to the difference by charging a storage battery by a midnight extra charge and selling the charged electric power charged in the storage battery to an electric power company at a daytime charge. Document 1 also discloses that merits, such as load leveling, correspondence to steep demand, and upgrading of electric power on power lines, are obtained by a building of the consumer supplying electric power from the storage battery to the electric power system. Document 1 further discloses that an electric power company may give back to the consumer a part of the merits as an incentive.

Document 1 discloses that the consumer brings the merits to the electric power company by performing charge and discharge of the storage battery in the building of the consumer. However, the merit for the consumer disclosed in Document 1 is the difference of the electricity bill between the charge and the discharge, and the incentive to the merit that the electric power company has obtained. Then, the composition from which the consumer acquires profit more positively is not assumed.

When a limit value is set to the amount of electric power that the building of the consumer receives, the building of the consumer may use electric power of the storage battery so that the received amount of electric power does not exceed the limit value. However, it may be impossible to use the electric power of the storage battery in the building of the consumer when the electric power of the storage battery is supplied to the electric power system. Accordingly, when the amount of electric power that the building of the consumer receives exceeds the limit value, an excess charge may be added to an electricity bill that the consumer pays to the electric power company in addition to a price for the amount of electric power.

US 2012/323386 A1 describes an electric power supply system that has, as multiple storage units, an output type battery of high output and small capacity and a capacity type battery of low output and large capacity. The charge-discharge electric power of each of the storage units is controlled by a controller according to a charge-discharge schedule for a prediction period. Based on a predicted power consumption schedule, a predicted power generation schedule, and a charge-discharge characteristic of each of the storage units, the controller determines a charge-discharge schedule with regards to an optimal evaluation index, and controls the storage units in accordance with the charge-discharge schedule.

EP 2 535 999 A1 describes an electric power supply system that includes: a distributed power supply which is disposed in at least one of a first power consumer; a power line which supplies the surplus power generated in the distributed power supply to at least one of a second power consumer; and a management device which manages the trade price of the surplus power supplied via the power line. The management device determines the trade price of the surplus power for following days on the basis of a prediction value for the amount of surplus power in the first electric power consumer unit and a prediction value for the amount of electric power consumption in the second electric power consumer unit over the following days.

### SUMMARY OF INVENTION

An object of the present invention is to provide a power adjustment system that can improve profits when a building of a consumer including a power supply facility such as a storage battery supplies electric power to an electric power system. An object of the present invention is also to provide a power adjustment method for the power adjustment system and a program that enables the power adjustment system.

The invention is defined by the independent claims. Preferred embodiments are described in the dependent claims.

A program according to an aspect of the present invention causes a computer to function as the power adjustment system described above. The present invention is not limited to the program. The present invention may be a computer-readable recording medium recording the program.

According to the aspect of the present invention, it is possible to improve profits, which the consumer receives, when the building of the consumer including the power supply facility such as the storage battery supplies the electric power to the electric power system.

### BRIEF DESCRIPTION OF DRAWINGS

Preferred embodiments of the present invention will now be described in further details. Other features and advantages of the present invention will become better understood with regard to the following detailed description and accompanying drawings where:
FIG. 1 is a block diagram of an example of a constitution according to an embodiment;
FIG. 2 is a drawing showing an example of setting a limit value in the embodiment;
FIG. 3 is a drawing showing an example of concluding a contract in the embodiment; and
FIG. 4 is a block diagram of an example of another constitution according to the embodiment.

### DESCRIPTION OF EMBODIMENTS

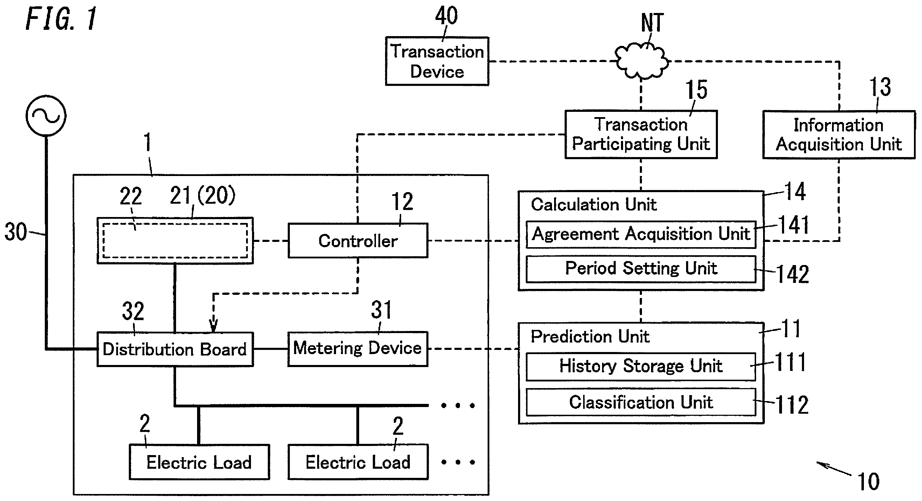

As shown in FIG. 1, a power adjustment system 10 described below is configured to transact with a transaction device 40, according to a transaction condition, whether or not electric power from a power supply facility 20 in a building 1 of a consumer is supplied to an electric power system 30 . The examples of the transaction device 40 include a web server and a cloud computing system that are managed by an electric utility.

The power adjustment system 10 includes a prediction unit 11, a controller 12, a calculation unit 14, and a transaction participating unit 15. The prediction unit 11 is configured to predict electric power to be consumed by a plurality of electric loads 2 in the building 1. The controller 12 is configured to select any one of a first state, in which the electric power from the power supply facility 20 is supplied to an electric power system 30, and a second state, in which the electric power from the power supply facility 20 is supplied to the electric loads 2.

The calculation unit 14 is configured to calculate an excess charge to be paid in addition to a price for electric power received by the building 1 when the electric power predicted by the prediction unit 11 exceeds a limit value that is set to the building 1. The transaction participating unit 15 is configured to transact with the transaction device 40 when a first amount of money that the consumer receives is more than a second amount of money as the excess charge while the first state is selected.

The transaction participating unit 15 is preferably configured to notify the transaction device 40 that an application is performed with a transaction condition registered to the transaction device 40 when the transaction participating unit 15 is allowed to transact with the transaction device 40, and receive, from the transaction device 40, a determination result whether or not a contract is concluded. The controller 12 is preferably configured to select the first state when the contract is concluded. The controller 12 is also preferably configured to select the second state, when the contract is not concluded, so that the electric power from the electric power system 30 does not exceed the limit value.

The power supply facility 20 preferably includes an electric storage facility 21 including a storage battery 22 that is charged with electric power from the electric power system 30.

The prediction unit 11 is preferably receive, from a metering device 31, electric power consumed by the electric load 2 in the building 1. The prediction unit 11 is also preferably predict the amount of electric power consumed by the electric load 2 for a fixed period based on a change in electric power metered by the metering device 31 with time.

Furthermore, the prediction unit 11 preferably includes a history storage unit 111 and a classification unit 112. The history storage unit 111 is configured to store a change in electric power consumed by the electric load 2 with time. The classification unit 112 is configured to classify a change pattern of electric power based on the change in electric power stored in the history storage unit 111. In this case, the prediction unit 11 is preferably predict the amount of electric power to be consumed by the electric load 2 for the fixed period by comparing the change in the electric power received from the metering device 31 with time and the change pattern classified by the classification unit 112.

The transaction participating unit 15 is preferably compare the sum of the first amount of money with the sum of the second amount of money for a predetermined period for which a plurality of transaction with the transaction device 40 is allowed. The transaction participating unit 15 is also preferably configured to notify the transaction device 40 that an application is performed with a transaction condition registered in the transaction device 40 when the sum of the first amount of money is more than the sum of the second amount of money.

Furthermore, the calculation unit 14 preferably includes an agreement acquisition unit 141 configured to acquire an agreement defining a limit value by communicating with an external device. The calculation unit 14 is also preferably configured to calculate the sum of the second amount of money for the predetermined period based on the agreement acquired by the agreement acquisition unit 141.

The transaction condition preferably includes demanded electric power, a price per unit amount of electric power, and a period for which a supply of power is demanded. The first amount of money is preferably calculated based on electric power supplied from the power supply facility 20. The electric power in the transaction condition denotes either the instantaneous value of electric power (the amount of electric power per unit time) or the amount of electric power for the period for which the supply of electric power is demanded.

Furthermore, the calculation unit 14 preferably includes a period setting unit 142 configured to set the predetermined period variably.

A power adjustment method according to an embodiment of the present invention includes transacting, with the transaction device 40, according to a transaction condition whether or not electric power from the power supply facility 20 in the building 1 of the consumer is supplied to the electric power system 30. The power adjustment method includes predicting, with the prediction unit 11, electric power consumed by an electric load 2 in the building 1. Furthermore, the calculation unit 14 is configured to calculate an excess charge to be paid in addition to a price for electric power that the building 1 receives when the power predicted by the prediction unit 11 is more than a limit value set to the building 1. The transaction participating unit 15 is configured to transact with the transaction device 40 when the first amount of money that the consumer receives is more than the second amount of money as the excess charge while electric power from the power supply facility 20 is supplied to the electric power system 30.

The power adjustment system 10 is achieved by a computer executing an appropriate program. In short, the program causes the computer to function as the power adjustment system 10. This program is provided through an electric communication line NT such as the Internet, or is provided by a computer-readable recording medium.

Hereinafter, an embodiment will be described in detail. The present embodiment is premised that the building 1 receiving electric power from an electric power system 30 includes a power supply facility 20. In addition, the present embodiment is premised that a first state, in which electric power from the power supply facility 20 is supplied to the electric power system 30, and a second state, in which the power is supplied to the electric loads 2 in the building 1, is selected.

The power supply facility 20 assumes an electric storage facility 21 including a storage battery 22. The electric storage facility 21 is configured to charge the storage battery 22 with power received from the electric power system 30. The electric storage facility 21 also includes a power converter that is configured to convert DC power from the storage battery 22 into AC power equivalent to AC power from the electric power system 30. The electric storage facility 21 includes a mass capacitor, but is not limited to include the mass capacitor. For example, the electric storage facility 21 may include a constitution for changing electric power into another energy and charging another energy. Alternatively, the power supply facility 20 may be a distributed power supply, which has a power generation function, such as a fuel cell, a photovoltaic power generation facility, or a wind power generation facility.

The examples of the building 1 include a hospital, a hotel, a factory, a store, a detached house, a condominium, an office building, and a commercial building. The technology described below can be applied when power of the whole building 1 can be treated collectively even if the building 1 is the condominium, the office building, the commercial building, or the like and a plurality of consumers exist in the building 1.

For example, a distribution board may be arranged at each building and a main distribution board that supplies electricity in the whole building 1 may be arranged in a building manager office, an electric room, or the like. Alternatively, in the case where high voltage package power receiving is performed in the whole building 1, because a watt hour meter for performing the high voltage package power receiving is installed as the metering device 31, the electric power that is received in the whole building 1 can be measured. Even if the building 1 is the detached house, when a plurality of building 1 in an area can be put in block as a set and can be treated, if the electric power aggregator exists, which treats collectively the electric power of the electric storage facility 21 in each building 1, the technology described below can be adopted.

If the building 1 is the hospital, the hotel, the factory, the condominium, the office building, the commercial building, or the like, the power capacity of the electric storage facility 21 is 100 kWh or more, and the electric storage facility 21 that has the power capacity over 1000 kWh may be installed. Similarly, in the area where a plurality of detached houses have gathered, when the electric storage facility 21 is shared, it is possible to install the mass electric storage facility 21.

When the plurality of buildings 1 share the power supply facility 20, it is desirable that a service entrepreneur that generalizes the plurality of building 1 exists so that an electric power utility that supplies electric power to the buildings 1 through the electric power system 30 can treat the buildings 1 in the set as one building collectively. This kind of service entrepreneur provides service to the set of the plurality of buildings 1 as vicarious execution of the electric power utility that undertakes a power generation business. The example of this kind of service entrepreneur includes a demand response entrepreneur that contains the electric power aggregator.

The electric power utility may be an electric power utility, which is chosen from a wholesale supply entrepreneur, and a specially designated power supply business company, a power producer and supplier, in addition to a public-power-supply-industry company (so-called an electric power company), and a service entrepreneur that purchases electric power from another company, without undertaking a power generation business, and sells the electric power to the buildings 1.

When the building 1 is the detached house, the power capacity of the electric storage facility 21 is about 1 to 10 kWh. However, even if the electric storage facility 21 is a small-scale facility of this level, when the power transaction is allowed, the technology described below can be adopted.

The building 1 includes the electric storage facility 21, which configured to supply electric power to the electric power system 30 as described above, in addition to the electric loads 2 that consume electric power. The building 1 also includes a distribution board 32. The electric power system 30, the electric storage facility 21, and the electric loads 2 are connected to the distribution board 32. The distribution board 32 forms a main circuit (not shown) that receives electric power from the electric power system 30, and the branch circuits (not shown) that are branched from the main circuit to two or more lines. That is, the distribution board 32 forms, in the building 1, a wiring network for supplying electric power that receives from the electric power system 30 to the electric loads 2 in the two or more lines.

The controller 12 is configured to manage the period and the amount of electric power for charge and discharge of the storage battery 22 in the electric storage facility 21. The charge of the storage battery 22 in the electric storage facility 21 is performed with electric power received from the electric power system 30. The selection of any one of the first state, in which the electric power from the electric storage facility 21 is supplied to the electric power system 30, and the second state, in which the electric power from the electric storage facility 21 is supplied to the electric loads 2, is performed by the controller 12 switching a switch (not shown) built in the distribution board 32.

The first state is used to mainly carry out head-tide flow of electric power to the electric power system 30 according to the demand from an electric power utility or the like. The consumer of the building 1 can receive, from the electric power utility or the service entrepreneur, the price for the mount of electric power when the head-tide flow to the electric power system 30 from the electric storage facility 21 has be performed.

The second state is used to mainly reduce the amount of electric power that receives from the electric power system 30. For example, a limit value may be set to the amount of electric power for a predetermined period as described below to the electric power that is received from the electric power system 30. In this case, the amount of electric power that is received from the electric power system 30 can be prevented from exceeding the limit value by supplying electric power to the electric loads 2 from the electric storage facility 21 at necessary timing.

The distribution board 32 is provided with the metering device 31 that is configured to measure the amount of electric power that has passed through each of the main circuit and the two or more branch circuits. However, the value of the amount of electric power that has passed through the main circuit may be the value measured by a watt hour meter (electric power meter) installed in the building 1. The value of the amount of electric power that has passed through each branch circuit may be the value measured by the measurement unit provided separately from the distribution board 32. The amount of electric power received from the electric power system 30 and the amount of electric power when the head-tide flow is carried out to the electric power system 30 are measured separately as the amount of electric power that has passed through the main circuit.

The metering device 31 is desirably an electronic watt hour meter that includes a current sensor (not shown) and a calculation unit (not shown). The current sensor is configured to measure the current that passes through the focused circuit. The calculation unit is configured to calculate the amount of electric power using the value of voltage between the lines of the focused circuit and the value of the current measured by the current sensor. The metering device 31 of the present embodiment may be configured not to measure the amount of electric power passed through the branch circuit for each branch circuit. The metering device 31 may be configured to measure at least the amount of electric power that is consumed by the electric loads 2.

The building 1 may have set up the contract of defining the limit value with the electric power utility about the amount of electric power that is received from the electric power system 30 as described above. The effective period to the limit value may be a comparatively long period, such as a year, a month, or a period of the time of updating of the contract. The effective period may also be a comparatively short period, such as a day or one period at which the electric power system 30 is made to carry out the head-tide flow of electric power. The amount of electric power compared with the limit value is the amount of electric power for a fixed period, such as thirty minutes and one hour. Hereinafter, this period is referred to as a first period.

As an example of the contents of the contract set between the electric power utility and the building 1, the case where the contract is set, which is to be calculated from the amount of electric power that the building 1 receives from the electric power system 30 will be described in the present embodiment. The electricity bill that the consumer of the building 1 pays to the electric power utility as the price for the electric power supply is mainly occupied by the sum of the basic charge and the charge that is obtained by the charge unit price being multiplied with the amount of the supplied power. Although the electricity bill contains a part for a seasonal variation and fuel adjustment expenses actually, these charge does not take into consideration in the present embodiment.

The contract demand is the power value for defining the basic charge, and is defined for each month using the maximum demand power (referred to as a demand value). The maximum demand power means the maximum value of every month among the amounts of electric power measured for each thirty minutes as the first period. The largest value among the maximum demand power of each month as the past one year including the applicable month (the applicable month and the past eleven months) is used as the contract demand of each month.

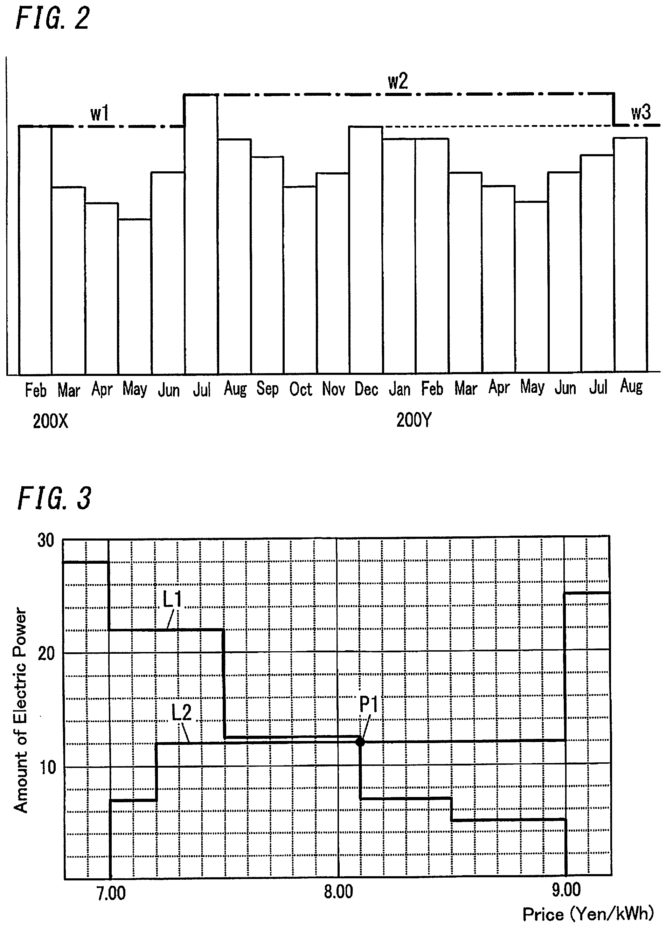

FIG. 2 shows the example of setting the contract demand. In the illustrated example, the building 1 has started receiving electric power from the electric power utility in February in 200X. In the illustrated example, the maximum demand power of February is largest in a five-month period to June from the time point when the building 1 has started receiving power from the electric power utility, and the maximum demand power of July in 200X is largest in one year after that. The maximum demand power of December in 200X is local maximum in the period after August in 200X.

Therefore, the maximum demand power of February in 200X is a contract demand W1 in the period from February to June in 200X, and the maximum demand power of July in 200X is a contract demand W2 in the period from July in 200X to July in 200Y in the example shown in FIG. 2. The maximum demand power of December in 200X is a contract demand W3 in the period after August in 200Y.

The contract demand is defined using the maximum demand power for the past one year as described above. Therefore, when the average value of the amounts of electric power measured at thirty minutes intervals is more than the contract demand, the contract demand will enlarge for one year after this time. As a result, an electricity bill will increase. That is, if the consumer can calculate the difference of the electricity bill for one year between the case where the average value of the amounts of electric power measured at thirty minutes intervals is maintained to be equal to or less than the contract demand, and the case where the average value is more than the contract demand, it is possible to estimate the amount of a loss to the increment of the contract demand.

Although the electricity bill contains a fixed amount part such as the basic charge that is defined with the contract demand, and the variation part that is defined according to the amount of received electric power, only the fixed amount part is focused in the present embodiment. In the present embodiment, the increment for one year of the basic charge corresponding to the increment of the contract demand is calculated, and this increment is assumed as the amount of the loss. That is, it is assumed that large increase and decrease does not arise in the amount of electric power for one year, and the total amount for one year of the variation part is assumed to be fixed.

As described above, in the case where the limit value (contract demand) is set to the amount of electric power that the building 1 receives, if an exceeded part to the limit value of the amount of received electric power can be estimated, it is possible to estimate the amount of a loss when the amount of electric power exceeds the limit value. On that account, the power adjustment system 10 includes a prediction unit 11 that is configured to predict the total amount of electric power that the electric loads 2 in the building 1 consume for the first period.

The prediction unit 11 is configured to predict the total amount of electric power using the change in the electric power measured by the metering device 31. For example, when the first period is thirty minutes, the prediction unit 11 is configured to acquire the amount of electric power from the metering device 31 by the unit time obtained by the first periods being divided into a plurality of sections, such as thirty seconds, one minute, or five minutes. The prediction unit 11 is also configured to predict the amount of electric power at an end point of the first period using the acquired amount of electric power. In this case, the amount of electric power for each time unit is assumed as an instantaneous value of electric power or an average value of electric power, and it is possible to presume the amount of electric power to be consumed in the first period based on the change in electric power for the first half of the first period. The example of the technology of presuming the amount of consumed power for the first period includes prediction technology such as linear prediction.

However, an error enlarges largely when the condition changes largely in the linear prediction. Thus, the prediction unit 11 is configured to predict the amount of electric power in the first period by the following methods instead of the linear prediction. That is, the prediction unit 11 includes a history storage unit 111 and a classification unit 112. The history storage unit 111 is configured to store the change in the electric power consumed by the electric loads 2 in the building 1 with time. The classification unit 112 is configured to classify a change pattern of the electric power in the first period in the building 1 using the history stored in the history storage unit 111.

The exceeded part of the amount of supplied power to the limit value can be presumed by using the past history about the electric power supplied from the electric storage facility 21 for each first period. Therefore, the history storage unit 111 is desirably configured to store the amount of electric power supplied to the electric loads 2 from the electric storage facility 21 in the first period in addition to the amount of electric power consumed by the electric loads 2. The classification unit 112 is configured to extract the change pattern in which the amount of electric power in the first period exceeds the limit value using the change pattern of the change in the amount of electric power with time, which is stored in the history storage unit 111, and the condition when electric power is supplied to the electric load 2 from the electric storage facility 21.

The prediction unit 11 is configured to compare the change pattern extracted by the classification unit 112, with the change pattern extracted from the change in the electric power measured by the metering device 31.
When the prediction unit 11 has predicted that the amount of electric power in the first period exceeds the limit value, the calculation unit 14 calculates the excess charge when the amount of electric power exceeds the limit value.
The excess charge changes with the content of the contract with the electric power utility. In the example described above, the excess charge is calculated as the difference of the electricity bill for one year between the case where the amount of electric power in the first period does not exceed the limit value and the case where the amount of electric power in the first period exceeds the limit value, for example.

The electricity bill for one future year is correctly incalculable. However, the calculation unit 14 is configured to presume the electricity bill based on the data of the history of the electric power consumed in the past period, the electric power consumed now, and the electric power consumed by another building 1 of the similar scale. For example, the electricity bill for one future year can be calculated based on the history of the amount of electric power for the past one year under the condition in which the amount of electric power consumed for every year between the past one year and the one future year is assumed to be no difference.

Incidentally, it is premised that the building 1 includes the electric storage facility 21. Therefore, when the electric energy that is to be received from the electric power system 30 may exceed the limit value, it is possible to decrease the amount of electric power from the electric power system 30 and to maintain the amount of received power below to the limit value by the electric power being supplied to the electric loads 2 from the electric storage facility 21. Because the electric storage facility 21 can also supply electric power to the electric power system 30, it is possible to receive the price from the electric power utility by electric power being supplied to the electric power system 30. That is, to supply electric power to the electric power system 30 from the electric storage facility 21 means that the consumer of the building 1 that is a buyer usually purchasing electric power from the electric power system 30 becomes a seller of electric power.

That is, the profit and loss arise to the building 1 according to the relation between the loss that arises when the amount of electric power received by the building 1 exceeds the limit value, and the profit that the building 1 receives to the amount of electric power supplied from the electric storage facility 21 to the electric power system 30. When the selection is performed so that the profits will be more than the loss, the consumer of the building 1 can receive profit. On the other hand, when the selection is performed so that the profit will be less than the loss, the consumer of the building 1 may be able to avoid the loss by not performing the selection.

Therefore, the power adjustment system 10 needs to determine whether or not there is the demand for supplying electric power to the electric power system 30 from the electric storage facility 21.
The power adjustment system 10 needs the information on the amount of electric power (hereinafter referred to as "the transaction amount of electric power"), the price to the unit amount of electric power (hereinafter referred to as "unit price"), and a period in which the demand for supplying electric power is performed (hereinafter referred to as "object period").

These pieces of information is registered into the transaction device 40 that the electric power utility manages. The pieces of information registered into the transaction device 40 (hereinafter referred to as "transaction condition") is updated every moment. The updating of transaction condition is desirably performed until the previous day to the day when the object period is started or during the morning on the day when the object period is started. The transaction device 40 may permit registering the transaction condition just before the start of the object period when the demand of electric power has urgency. The electric power utility that manages the transaction device 40 is desirably a service entrepreneur that provides the service about the transaction of electric power.

The transaction device 40 is configured to communicate with an information acquisition unit 13 and a transaction participating unit 15 through the electric communication line NT such as the Internet. The information acquisition unit 13 is configured to acquire, from the transaction device 40, the transaction condition containing the transaction amount of electric power, the unit price, and the object period. Because the transaction condition registered into the transaction device 40 is updated every moment, the information acquisition unit 13 is configured to monitor the change in the transaction condition to acquire a required transaction condition.

As described above, the power adjustment system 10 needs to estimate the loss and the profit in the case where electric power is supplied to the electric loads 2 from the electric storage facility 21, and the case where electric power is supplied to the electric power system 30 from the electric storage facility 21. When the amount of electric power from the electric power system 30 exceeds the limit value in the first period, the excess charge calculated by the calculation unit 14 is generated. On the other hand, the information acquisition unit 13 obtains the profit (= the unit price × the transaction amount of electric power) at the case where electric power is supplied to the electric power system 30 by the transaction condition acquired from the transaction device 40. The transaction participating unit 15 compares the profit that the information acquisition unit 13 acquires (first amount of money) with the excess charge that the calculation unit 14 calculates (second amount of money). When the first amount of money exceeds the second amount of money, the transaction participating unit 15 notifies that an application is performed under the transaction condition appropriate to the transaction device 40 through the electrical communication network NT.

When the number of the electric storage facility 21 corresponding to the application is one while the transaction device 40 has the application to the transaction condition, the contract with the building 1 including the electric storage facility 21 is concluded. On the other hand, when the number of the applications to the transaction condition is two or more, the transaction device 40 discusses the price with the transaction participating unit 15. When the price becomes an appropriate amount of money, the transaction device 40 concludes the contract to the transaction condition, as described below. When the determination result of the transaction device 40 is received from the transaction device 40 and the contract is concluded, the transaction participating unit 15 instructs to the controller 12 so that electric power is to be supplied to the electric power system 30 from the electric storage facility 21. On the other hand, when the contract is not concluded, the transaction participating unit 15 instructs to the controller 12 so that the electric power of the electric storage facility 21 is to be supplied to the electric loads 2.

Incidentally, the transaction device 40 includes an information storage unit (transaction table) as shown in Table 1 described below, for example, in order to register the transaction condition described above. Table 1 illustrates an example of setting up the price in the present embodiment.

**[Table 1]**

| **Object Period** | **Amount of Electric Power** | **Price (Unit Price)** |
|---|---|---|
| **P1** | **W1** | **V1** |
| **P2** | **W2** | **V2** |
| : | : | : |
| : | : | : |
| **Pn** | **Wn** | **Vn** |

The information storage unit stores the transaction condition that combines three kinds of data of the object period, the unit price, and the transaction amount of electric power. The unit price and the transaction amount of electric power are corresponded and registers in the information storage unit as a pair, and registration of a plurality of pairs are capable of being registered for each object period. In other words, the information storage unit has a plurality of storage areas (for example, 15 or 30) for registering multiple pairs of the unit price and the transaction amount of electric power for each object period. All the storage areas do not need to bury, and the object period when the pair of the unit price and the transaction amount of electric power is not registered may exist.

Table 2 described below shows an example of setting up the price in the embodiment. In Table 2, the object period that makes 30 minutes as the unit is set up.

**[Table 2]**

| **Object Period** | **1** | **2** | **3** | **······** | **n** |
|---|---|---|---|---|---|
| **00:00 to 00:30** | **5.03** | **7.45** | **9.00** | | |
| | **20** | **12** | **5** | | |
| **00:30 to 01:00** | **8.87** | | | | |
| | **20** | | | | |
| **01:00 to 01:30** | **8.50** | | | | |
| | **▲20** | | | | |
| : | : | | | | |
| : | : | | | | |

In Table 2, one day is classified into 48 object periods. In Table 2, an upper stage shows the unit price, and a lower stage shows the transaction amount of electric power. The transaction amount of electric power makes 1000 kWh per hour as a unit. The unit price expresses the price per 1 kWh by making Yen into a unit. Therefore, the value per 30 minutes is a half of the value of the lower stage.

A participant that wishes to transact electric power registers the amount of electric power and the unit price into the information storage unit. Because the transaction amount of electric power is a comparatively large value of the degree that makes 1000 kWh as a unit, the participant that wishes to acquire electric power is mainly the electric power utility. Although the participant that wishes to acquire electric power is mainly the electric power utility, the participant that wishes to acquire electric power is not limited to the electric power utility. The participant that wishes to acquire electric power may be the building 1, such as a hospital, a factory, a hotel, and a store. Although the participant that wishes to supply electric power to the electric power system 30 is mainly the building 1 that purchases electric power from the electric power utility, the participant that wishes to supply electric power to the electric power system 30 is not limited to the building 1. The participant that wishes to supply electric power to the electric power system 30 may be another electric power utility that capably connect with the electricity grid of the electric power utility that manages the transaction device 40.

The participant that wishes to acquire electric power registers the demand amount of electric power and the unit price into the information storage unit. The participant that wishes to supply electric power registers the provided amount of electric power and the unit price into the information storage unit. The transaction amount of electric power becomes a positive value in the case of the demand and a negative value in the case of sale. In Table 2, the numerical value to which the symbol "▲" is added expresses a negative value. That is, Table 2 shows that the object period to which the symbol "▲" is added is a period in which the head-tide flow is possible.

When multiple pairs of the transaction amount of electric power and the unit price are registered into one object period, the participant that wishes to buy electric power sets up a pair so that the transaction amount of electric power decreases as the unit price becomes expensive. When multiple pairs of the transaction amount of electric power and the unit price are registered into one object period, the participant that wishes to sell electric power sets up a pair so that the transaction amount of electric power increases as the unit price becomes expensive. That is, the buyer of electric power is going to reduce expense by decreasing the amount of electric power to be bought as the unit price becomes expensive. The seller of electric power is going to increase profit by increasing the amount of electric power to be sold as the unit price becomes expensive.

The transaction device 40 includes the information storage unit that is assigned for each participant that transacts electric power. Here, in order to make the explanation simple, it is assumed that the participants are three persons of A, B, and C. Table 3 described below shows an example of a transaction of a participant A. Table 4 described below shows an example of a transaction of a participant B. Table 5 described below shows an example of a transaction of a participant C.

**[Table 3]**

| **Object Period** | **1** | **2** | **3** | **······** | **n** |
|---|---|---|---|---|---|
| **14:00 to 14:30** | **7.00** | **8.50** | **9.00** | | |
| | **13** | **7** | **5** | | |

**[Table 4]**

| **Object Period** | **1** | **2** | | **······** | **n** |
|---|---|---|---|---|---|
| **14:00 to 14:30** | **7.50** | **8.10** | | | |
| | **15** | **6** | | | |

**[Table 5]**

| **Object Period** | **1** | **2** | **3** | **······** | **n** |
|---|---|---|---|---|---|
| **14:00 to 14:30** | **7.00** | **7.20** | **9.00** | | |
| | **▲7** | **▲**12 | **▲25** | | |

In the examples shown in Tables 3 to 5, the participant A and the participant B wish to buy electric power because the transaction amount of electric power is a positive value, and the participant C wishes to sell electric power because the transaction amount of electric power is a negative value. Tables 3 to 5 show the examples of the case where the object period is 30 minutes of 14:00 to 14:30.

The buyer of electric power is going to reduce expense, and the seller of electric power is going to increase profit, as described above. Therefore, the transaction amount of electric power set to the information storage unit means the amount of electric power that is bought by the buyer of electric power when a unit price is less than the unit price of the pair, and means the amount of electric power that is sold by the seller of electric power when a unit price is more than the unit price of the pair.

In Tables 3 to 5, because the buyer of electric power is the participant A and the participant B, the relation between the transaction amount of electric power and the unit price is defined using the values stored the information storage unit of the participant A and the information storage unit of the participant B.
Table 6 described below shows the relation of the transaction amount of electric power and the unit price that is obtained by those of the participant A and the participant B are combined.

**[Table 6]**

| | | | | | |
|---|---|---|---|---|---|
| **Unit Price (Yen)** | **7.00** | **7.50** | **8.10** | **8.50** | **9.00** |
| **Participant A** | **13** | **7** | **7** | **7** | **5** |
| **Participant B** | **15** | **15** | **6** | **0** | **0** |
| **Participant A and Participant B** | **28** | **22** | **13** | **7** | **5** |

That is, if the unit price is 7.00 yen or less, the transaction amount of electric power that can be bought to per hour is 28000 kWh. If the unit price is more than 7.00 yen and 7.50 yen or less, the transaction amount of electric power that can be bought to per hour is 22000 kWh. As above, if the unit price is more than 7.50 yen and 8.10 yen or less, the transaction amount of electric power is 13000 kWh. If the unit price is more than 8.10 yen and 8.50 yen or less, the transaction amount of electric power is 7000 kWh. If the unit price is more than 8.50 yen and 9.00 yen or less, the transaction amount of electric power is 5000 kWh. If the unit price is more than 9.00 yen, acquisition of electric power is given up.

On the other hand, regarding the participant C that is a seller, if the unit price is more than 7.00 yen and 7.20 yen or less, the transaction amount of electric power that can be sold to per hour is 7000 kWh. Similarly, if the unit price is more than 7.20 yen and for 9.00 yen or less, the transaction amount of electric power is 25000 kWh. If the unit price is more than 9.00 yen, the transaction amount of electric power is 12000 kWh or less. If the unit price is 7.00 yen or less, the participant C does not sell electric power.

The relation described above is summarized below. The relation of the unit price to the transaction amount of electric power that the participant A and the participant B as buyers buy, and the relation of the unit price to the transaction amount of electric power that the participant C as a seller sell change as shown in FIG. 3. Hereinafter, among the graphs showing the relation between the transaction amount of electric power and the unit price, the graph by which a buyer is denoted is called a demand line L1, and the graph showing a seller is called a supply line L2. When these graphs are used, the intersection P1 of the demand line L1 and the supply line L2 expresses the point that the transaction amount of electric power that a buyer demands is the same as the transaction amount of electric power that a seller can supply. That is, in the relation shown in FIG. 3, the transaction amount of electric power in which a contract is concluded is 12000 kWh per hour, and the unit price per 1 kWh at this time is 8.10 yen.

That is, among three persons of the participant A, the participant B, and the participant C, the contract that the transaction amount of electric power of 12000 kWh per hour is sold and bought by 8.10 yen per 1 kWh is concluded in the time zone of 14:00 to 14:30. The total sum of the transaction amount of electric power that the participant A and the participant B as buyers demand is 13000 kWh per hour, and the transaction amount of electric power that the participant C can sell is 12000 kWh. Accordingly, the amount of electric power of only 1000 kWh runs short, but this insufficiency is obtained in another way.

The example of the transaction described above is one example. Because it is assumed that many participants exist actually, the number of combination for concluding the contract may become a huge number. Therefore, it is desirable to extract a suitable combination with the algorithm by which a comparatively good solution can be calculated in a limited time, such as a probabilistic algorithm or a genetic algorithm.

In the example described above, the demand line L1 and the supply line L2 are expressed by the line of discontinuity by linear lines being combined. However, the demand line L1 and the supply line L2 may be expressed by the smoothly continuous curve. The relation between the demand line L1 and the supply line L2 is variously set up according to each environmental condition of a buyer and a seller. The environmental condition means the funding ability of the buyer or the seller, the urgency of electricity demand, or the like.

In the above-described example, the case where the transaction amount of electric power is comparatively large is described. The embodiment is not limited to this case. When the building 1 including the small-scale electric storage facility 21 of about 5 kWh, such as a detached house, participates in the transaction of electric power, it is desirable for an electric power aggregator to treat electric power of a plurality of buildings 1 collectively. Alternatively, when shortage arises in the transaction amount of electric power that a seller can sell to the transaction amount of electric power that a buyer demands to acquire as described above, the electric power appropriated for the insufficiency may be supplied from the small-scale electric storage facility 21.

Although the example of operation described above is described as an example of the case where the contract demand is set up based on the maximum demand power for the past one year, the calculation method of the electricity bill based on the amount of electric power consumed by the building 1 is known variously. The example of operation is an example of the case where, if the maximum demand power exceeds the contract demand, the forfeit according to an exceeded part is added as an electricity bill, and the contract demand is also changed, and the basic charge is changed.

The limit value is not limited to the contract demand. The limit value may be the amount of electric power that the electric power utility sets a period and sets up temporarily. For example, the building 1 made beforehand a contract of the received amount of electric power, and the contracted received amount of electric power may be set up as the limit value. Thus, according to the contract of setting up the received amount of electric power beforehand, if the consumer of the building 1 decides to pay, to the electric power utility, the forfeit according to the exceeded part when the set-up received amount of electric power is exceeded, the amount of a loss is equivalent to the amount of the forfeit.

Alternatively, there is the case where the contract may be set up that the two or more steps of reference values are set up to the cumulative values of electric power in fixed time (for example, one month or one year), the unit price by which electric energy is multiplied rises is set up whenever the cumulative value of the electric power consumed by the building 1 exceeds the reference value of each stage. On this contract, the difference between the case where the unit price does not rise and the case where the unit price rise is equivalent to the amount of a loss, such as the case where the contract demand is set up.

Further, as shown in FIG. 1, the calculation unit 14 may include an agreement acquisition unit 141 that is configured to acquire an agreement that defines the limit value by communication with an external device such as the transaction device 40. If the calculation unit 14 includes the agreement acquisition unit 141, it is possible to easily respond to change in the rule for calculating the excess charge described above.

In the configuration example described above, the transaction participating unit 15 calculates, about only one transaction, the size relation of the profit, which is acquired by electric power being supplied from the electric storage facility 21 to the electric power system 30, and the loss, which is occurred by the amount of electric power from the electric power system 30 exceeds the limit value. On the other hand, when the excess charge arises over period (for example, one month or one year) sufficient longer than a first period, this period may be as a second period. The sum total of the profit and the sum total of the loss may be estimated in the second period, and the transaction participating unit 15 may determine the size relation of the profit and the loss. The second period means a period in which two or more transactions with the transaction device 40 can be performed. The second period changes according to the agreement that calculates a surcharge. Therefore, when the total sum of the profit and the loss in the second period is estimated, it is desirable to set up the second period based on the agreement which the agreement acquisition unit 141 had acquired. The calculation unit 14 may include a period setting unit 142 that is configured to set up the second period in manually.

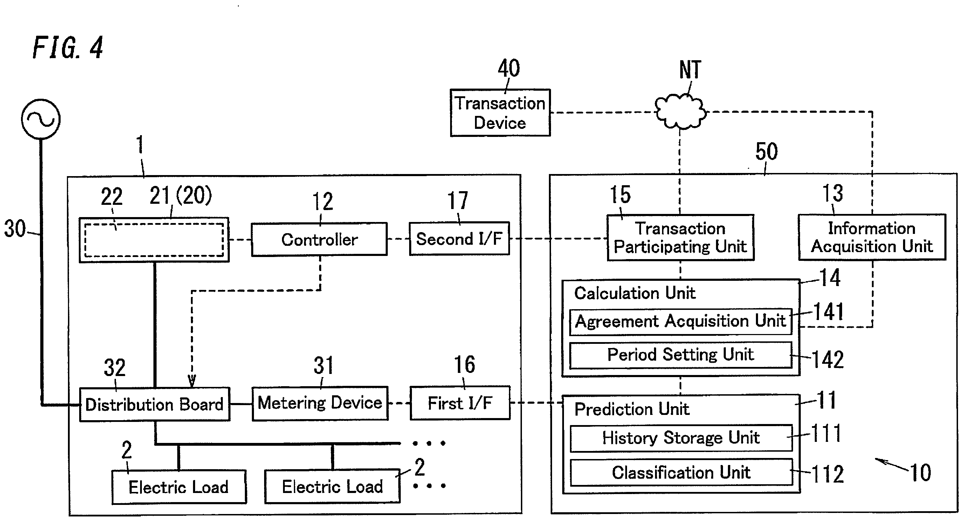

In the configuration example described above, the prediction unit 11, the information acquisition unit 13, the calculation unit 14, and the transaction participating unit 15 may be provided in the building 1, but may be provided separately from the building 1. When these compositions are provided separately from the building 1, as shown in FIG. 4, these compositions may be achieved as an adjustment device 50 that includes a web server or a cloud computing system. In order to output the amount of electric power that is measured by the metering device 31 installed in the building 1 to the prediction unit 11 in these compositions, the building 1 desirably includes a first communication interface (hereinafter referred to as "first I/F") 16. In order that the controller 12 receives, from the transaction participating unit 15, information whether or not the contract has included, the building 1 desirably includes a second communication interface (hereinafter "second I/F") 17.

That is, the building 1 includes the first I/F 16 and the second I/F 17 and thus enable to receive the service which the transaction device 40 provides without including the prediction unit 11, the information acquisition unit 13, the calculation unit 14, and the transaction participating unit 15.

In the embodiment described above, the participant that wishes the transaction of electric power has registered the amount of electric power and the unit price into the information storage unit of the transaction device 40. However, the participant may register a power value and the unit price into the information storage unit. In this case, the power value registered into the information storage unit expresses electric power that can be supplied per unit time from the power supply facility 20 in the object period. Although the electric storage facility 21 is assumed to be arranged in the building 1 in the configuration example described above, the electric storage facility 21 is limited to be arranged in the building 1. The storage battery 22 of the electric storage facility 21 may be a storage battery installed in the electric vehicle.

In the configuration example described above, electric power is supplied to the electric power system 30 from the electric storage facility 21 when the amount of money that the consumer of the building 1 receives exceeds the amount of excess charge to received power while the transaction of electric power is performed. However, another condition may be taken into consideration in order to determine eventually whether electric power is supplied to the electric loads 2 from the electric storage facility 21, or electric power is supplied to the electric power system 30.

Although the present invention has been described with reference to a certain preferred embodiment, numerous modifications and variations can be made by those skilled in the art within the scope of the claims.

## Claims

1. A power adjustment system that is configured to transact with a transaction device (40), according to a transaction condition, whether or not electric power from a power supply facility (20) in a building (1) of a consumer is supplied to an electric power system (30), the power adjustment system comprising:
a prediction unit (11) configured to predict electric power that is to be consumed by an electric load (2) in the building (1);
a controller (12) configured to select any one of a first state, in which the electric power from the power supply facility (20) is supplied to the electric power system (30), and a second state, in which the electric power from the power supply facility (20) is supplied to the electric load (2);
a calculation unit (14) configured to calculate an excess charge to be paid in addition to a price for electric power that the building (1) receives from the electric power system (30) when the electric power predicted by the prediction unit (11) exceeds a limit value that is set to the amount of electric power for a predetermined period that is received at the building (1) from the electric power system (30), the price being defined according to an amount of electric power supplied from the electric power system (30) and obtained by a charge unit price being multiplied with the amount of electric power supplied from the electric power system (30); and
a transaction participating unit (15) configured to be allowed to transact with the transaction device (40) when a first amount of money received by the consumer is more than a second amount of money as the excess charge while the first state is selected,
wherein the prediction unit (11) is configured to receive, from a metering device (31), a value of electric power consumed by the electric load (2) in the building (1), the prediction unit (11) being configured to predict an amount of electric power that is to be consumed by the electric load (2) for a first period based on a change in electric power metered by the metering device (31) with time;
wherein the prediction unit (11) includes:
a history storage unit (111) configured to store the change in electric power consumed by the electric load (2) with time, and to store the amount of electric power supplied from an electric storage facility (21) to the electric load (2) in the first period in addition to the amount of electric power consumed by the electric load (2) in the first period of time, and
a classification unit (112) configured to classify a change pattern of electric power in the first period based on the change in electric power stored in the history storage unit (111) and to extract the change pattern in which the amount of electric power in the first period exceeds the limit value using the change pattern of the change in the amount of electric power with time, which is stored in the history storage unit (111), and the condition that the electric power is supplied to the electric load (2) from the electric storage facility (21),
the prediction unit (11) being configured to predict the amount of electric power to be consumed by the electric load (2) for the first period by comparing the change in electric power received from the metering device (31) with time and the change pattern classified by the classification unit (112) and to predict that the amount of electric power in the first period exceeds the limit value by comparing the change pattern extracted by the classification unit (112) with the change pattern extracted from the change in the electric power measured by the metering device (31).

2. The power adjustment system according to claim 1, wherein
the transaction participating unit is configured to notify the transaction device (40), when being allowed to transact with the transaction device, that an application is performed with the transaction condition registered to the transaction device (40), the transaction participating unit (15) being configured to receive, from the transaction device (40), a determination result whether or not a contract is concluded, and
the controller (12) is configured to select the first state when the contract is concluded, the controller (12) being configured to select the second state so that the electric power from the electric power system (30) does not exceed the limit value unless the contract is concluded.

3. The power adjustment system according to claim 1 or 2, wherein the power supply facility (20) is an electric storage facility (21) that includes a storage battery (22) configured to be charged with the electric power from the electric power system (30).

4. The power adjustment system according to any one of claims 1 to 3, wherein the transaction participating unit (15) is configured to compare a sum of the first amount of money with a sum of the second amount of money for a predetermined period for which a plurality of transactions with the transaction device are allowed, the transaction participating unit (15) being configured to notify the transaction device (40) that an application is performed according to the transaction condition registered by the transaction device when the sum of the first amount of money is more than the sum of the second amount of money.

5. The power adjustment system according to claim 4, wherein
the calculation unit (14) includes an agreement acquisition unit (141) that is configured to acquire an agreement that defines the limit value, by communicating with an external device,
the calculation unit (14) being configured to calculate the sum of the second amount of money for the predetermined period based on the agreement acquired by the agreement acquisition unit (141).

6. The power adjustment system according to any one of claims 1 to 5, wherein
the transaction condition contains demanded electric power, a price per unit amount of electric power, and a period for which supply of electric power is demanded, and
the first amount of money is calculated based on the price per unit amount of electric power and electric power that is allowed to be supplied from the power supply facility (20).

7. The power adjustment system according to claim 4 or 5, wherein the calculation unit (14) includes a period setting unit (142) that is configured to set the predetermined period variably.

8. A power adjustment method for transacting with a transaction device, according to a transaction condition, whether or not electric power from a power supply facility (20) in a building (1) of a consumer is supplied to an electric power system (30), the power adjustment method comprising:
predicting, with a prediction unit (11), electric power that is to be consumed by an electric load (2) in the building (1);
selecting, with a controller (12), any one of a first state, in which the electric power from the power supply facility (20) is supplied to the electric power system (30), and a second state, in which the electric power from the power supply facility (20) is supplied to the electric load (2);
calculating, with a calculation unit (14), an excess charge to be paid in addition to a price for electric power that the building receives from the electric power system (30) when the electric power predicted by the prediction unit (11) exceeds a limit value that is set to the amount of electric power for a predetermined period that is received at the building (1) from the electric power system (30), the price being defined according to an amount of electric power supplied from the electric power system (30) and obtained by a charge unit price being multiplied with the amount of electric power supplied from the electric power system (30);
allowing a transaction participating unit (15) to transact with the transaction device (40) when a first amount of money received by the consumer is more than a second amount of money as the excess charge while the first state is selected;
receiving, at the prediction unit (11) and from a metering device (31), a value of electric power consumed by the electric load (2) in the building (1);
predicting, with the prediction unit (11), an amount of electric power that is to be consumed by the electric load (2) for a first period based on a change in electric power metered by the metering device (31) with time;
storing, with a history storage unit (111) included in the prediction unit (11), the change in electric power consumed by the electric load (2) with time and storing, by the history storage unit (111), the amount of electric power supplied from an electric storage facility (21) to the electric load (2) in the first period in addition to the amount of electric power consumed by the electric load (2) in the first period of time; and
classifying, with a classification unit (112) included in the prediction unit (11), a change pattern of electric power in the first period based on the change in electric power stored in the history storage unit (111) and extracting, with the classification unit (112), the change pattern in which the amount of electric power in the first period exceeds the limit value using the change pattern of the change in the amount of electric power with time, which is stored in the history storage unit (111), and the condition that the electric power is supplied to the electric load (2) from the electric storage facility (21); and
predicting, with the prediction unit (11), the amount of electric power to be consumed by the electric load (2) for the first period by comparing the change in electric power received from the metering device (31) with time and the change pattern classified by the classification unit (112) and predicting, with the prediction unit (11), that the amount of electric power in the first period exceeds the limit value by comparing the change pattern extracted by the classification unit (112) with the change pattern extracted from the change in the electric power measured by the metering device (31).

9. A computer-readiable mediun storing program instructions, which, when execited by the computer, cause the computer to function as the power adjustment system according to any one of claims 1 to 7.

## Patentansprüche

1. Leistungseinstellungssystem, das dazu eingerichtet ist, mit einer Transaktionsvorrichtung (40) in Entsprechung zu einer Transaktionsbedingung zu verhandeln, ob von einer Energieversorgungseinrichtung (20) in einem Gebäude (1) eines Verbrauchers einem elektrischen Energiesystem (30) elektrische Energie geliefert wird, oder ob nicht, wobei das Leistungseinstellungssystem, aufweist:
eine Vorherberechnungseinheit (11), die dazu eingerichtet ist, eine elektrische Energie vorherzuberechnen, die durch eine elektrische Last (2) in dem Gebäude (1) voraussichtlich verbraucht wird;
eine Steuereinrichtung (12), die dazu eingerichtet ist, einen beliebigen von einem ersten Zustand, bei dem die elektrische Energie von der Energieversorgungseinrichtung (20) dem elektrischen Energiesystem (30) zugeführt wird, und einem zweiten Zustand auszuwählen, bei dem die elektrische Energie von der Energieversorgungseinrichtung (20) der elektrischen Last (2) zugeführt wird;
eine Berechnungseinheit (14), die dazu eingerichtet ist, eine Aufschlaggebühr zu berechnen, die zu einem Preis für elektrische Energie, den das Gebäude (1) von dem elektrischen Energiesystem (30) empfängt, zusätzlich zu zahlen ist, wenn die elektrische Energie, die durch die Vorherberechnungseinheit (11) vorherberechnet ist, einen Grenzwert überschreitet, der für die Menge elektrischer Energie, die bei dem Gebäude (1) von dem elektrischen Energiesystem (30) empfangen ist, für eine vorbestimmte Zeitspanne eingestellt ist, wobei der Preis in Entsprechung zu einer Menge elektrischer Energie, die von dem elektrischen Energiesystem (30) geliefert wird, definiert wird und erhalten wird, indem ein Preis einer Tarifeinheit mit der Menge elektrischer Energie multipliziert wird, die von dem elektrischen Energiesystem (30) geliefert ist; und
eine Transaktionsmitwirkungseinheit (15), die dazu eingerichtet ist, eine Erlaubnis zu erhalten, mit der Transaktionsvorrichtung (40) auszuhandeln, wenn ein erster Geldbetrag, der durch den Verbraucher empfangen ist, größer ist als ein zweiter Geldbetrag, als die Aufschlaggebühr, während der erste Zustand ausgewählt ist,
wobei die Vorherberechnungseinheit (11) dazu eingerichtet ist, von einer Messvorrichtung (31) einen Wert einer elektrischen Energie zu empfangen, die durch die elektrische Last (2) in dem Gebäude (1) verbraucht wird, wobei die Vorherberechnungseinheit (11) dafür ausgelegt ist, auf der Grundlage einer Änderung der elektrischen Energie, die durch die Messvorrichtung (31) über die Zeit gemessen ist, eine Menge elektrischer Energie vorherzuberechnen, die durch die elektrische Last (2) für eine erste Zeitspanne voraussichtlich verbraucht wird;
wobei die Vorherberechnungseinheit (11) enthält:
eine Vorgeschichtespeichereinheit (111), die dazu eingerichtet ist, die Änderung elektrischer Energie, die durch die elektrische Last (2) über die Zeit verbraucht wird, zu speichern und die Menge elektrischer Energie zu speichern, die der elektrischen Last (2) von einer elektrischen Speichereinrichtung (21) in der ersten Zeitspanne zusätzlich zu der Menge elektrischer Energie geliefert wird, die durch die elektrische Last (2) in der ersten Zeitspanne verbraucht ist, und
eine Einstufungseinheit (112), die dazu eingerichtet ist, ein Änderungsmuster elektrischer Energie in der ersten Zeitspanne auf der Grundlage einer Änderung elektrischer Energie, die in der Vorgeschichtespeichereinheit (111) gespeichert ist, einzustufen und das Änderungsmuster, bei dem die Menge elektrischer Energie in der ersten Zeitspanne den Grenzwert überschreitet, unter Verwendung des in der Vorgeschichtespeichereinheit (111) gespeicherten Änderungsmusters der Änderung der Menge elektrischer Energie über die Zeit und der Bedingung, dass die elektrische Energie der elektrischen Last (2) von der elektrischen Speichereinrichtung (21) zugeführt wird, zu extrahieren,
wobei die Vorherberechnungseinheit (11) dafür ausgelegt ist, die Menge elektrischer Energie, die durch die elektrische Last (2) für die erste Zeitspanne voraussichtlich verbraucht wird, durch ein Vergleichen der Änderung einer elektrischen Energie, die von der Messvorrichtung (31) über die Zeit empfangen ist, mit dem Änderungsmuster, das durch die Einstufungseinheit (112) eingestuft ist, vorherzuberechnen und durch ein Vergleichen des Änderungsmusters, das durch die Einstufungseinheit (112) extrahiert ist, mit dem Änderungsmuster, das aus der Änderung der durch die Messvorrichtung (31) gemessenen elektrischen Energie extrahiert ist, vorherzuberechnen, dass die Menge elektrischer Energie in der ersten Zeitspanne den Grenzwert überschreitet.

2. Leistungseinstellungssystem nach Anspruch 1, wobei
die Transaktionsmitwirkungseinheit dazu eingerichtet ist, wenn ihr erlaubt ist, mit der Transaktionsvorrichtung zu verhandeln, der Transaktionsvorrichtung (40) zu melden, dass eine Anwendung mit der Transaktionsbedingung, die der Transaktionsvorrichtung (40) zugeordnet ist, durchgeführt wird, wobei die Transaktionsmitwirkungseinheit (15) dafür ausgelegt ist, von der Transaktionsvorrichtung (40) ein Ermittlungsergebnis darüber zu empfangen, ob ein Vertrag abgeschlossen ist, oder ob nicht, und
die Steuereinrichtung (12) dazu eingerichtet ist, den ersten Zustand auszuwählen, wenn der Vertrag geschlossen ist, wobei die Steuereinrichtung (12) dafür ausgelegt ist, den zweiten Zustand auszuwählen, damit die elektrische Energie von dem elektrischen Energiesystem (30) den Grenzwert nicht überschreitet, es sei denn, der Vertrag ist geschlossen.

3. Leistungseinstellungssystem nach Anspruch 1 oder 2, wobei die Energieversorgungseinrichtung (20) eine elektrische Speichereinrichtung (21) ist, die eine Speicherbatterie (22) aufweist, die dazu eingerichtet ist, von dem elektrischen Energiesystem (30) mit elektrischer Energie aufgeladen zu werden.

4. Leistungseinstellungssystem nach einem beliebigen der Ansprüche 1 bis 3, wobei die Transaktionsmitwirkungseinheit (15) dazu eingerichtet ist, eine Summe des ersten Geldbetrags mit einer Summe des zweiten Geldbetrags für eine vorbestimmte Zeitspanne, für die mehrere Transaktionen mit der Transaktionsvorrichtung erlaubt sind, zu vergleichen, wobei die Transaktionsmitwirkungseinheit (15) dafür ausgelegt ist, der Transaktionsvorrichtung (40) zu melden, dass eine Anwendung in Entsprechung zu der Transaktionsbedingung, die durch die Transaktionsvorrichtung zugeordnet ist, durchgeführt wird, wenn die Summe des ersten Geldbetrags größer ist als die Summe des zweiten Geldbetrags.

5. Leistungseinstellungssystem nach Anspruch 4, wobei die Berechnungseinheit (14) eine Übereinkunftseinholungseinheit (141) enthält, die dazu eingerichtet ist, durch eine Kommunikation mit einer externen Vorrichtung eine Übereinkunft einzuholen, die den Grenzwert definiert,
wobei die Berechnungseinheit (14) dafür ausgelegt ist, die Summe des zweiten Geldbetrags für die vorbestimmte Zeitspanne auf der Grundlage der Übereinkunft zu berechnen, die durch die Übereinkunftseinholungseinheit (141) eingeholt ist.

6. Leistungseinstellungssystem nach einem beliebigen der Ansprüche 1 bis 5,
wobei die Transaktionsbedingung eine nachgefragte Energie, einen Preis pro Mengeneinheit elektrischer Energie und eine Zeitspanne beinhaltet, für die einen Lieferung elektrischer Energie nachgefragt wird, und
der erste Geldbetrag auf der Grundlage des Preises pro Mengeneinheit elektrischer Energie und elektrischer Energie berechnet wird, die von der Energieversorgungseinrichtung (20) geliefert werden darf.

7. Leistungseinstellungssystem nach Anspruch 4 oder 5, wobei die Berechnungseinheit (14) eine Zeitspanneneinstelleinheit (142) enthält, die dafür ausgelegt ist, die vorbestimmte Zeitspanne variabel einzustellen.

8. Leistungseinstellungsverfahren zum Verhandeln mit einer Transaktionsvorrichtung in Entsprechung zu einer Transaktionsbedingung, ob elektrische Energie von einer Energieversorgungseinrichtung (20) in einem Gebäude (1) eines Verbrauchers einem elektrischen Energiesystem (30) zugeführt wird, oder ob nicht, wobei das Leistungseinstellungsverfahren umfasst:
Vorherberechnen einer elektrischen Energie, die durch eine elektrische Last (2) in dem Gebäude (1) voraussichtlich verbraucht wird, mittels einer Vorherberechnungseinheit (11) ;
Auswählen, mittels einer Steuereinrichtung (12), eines beliebigen von einem ersten Zustand, bei dem die elektrische Energie von der Energieversorgungseinrichtung (20) dem elektrischen Energiesystem (30) zugeführt wird, und einem zweiten Zustand, bei dem die elektrische Energie von der Energieversorgungseinrichtung (20) der elektrischen Last (2) zugeführt wird;
Berechnen, mittels einer Berechnungseinheit (14), einer Aufschlaggebühr, die zusätzlich zu einem Preis für elektrische Energie zu zahlen ist, die das Gebäude von dem elektrischen Energiesystem (30) erhält, wenn die elektrische Energie, die durch die Vorherberechnungseinheit (11) vorherberechnet ist, einen Grenzwert überschreitet, der für eine vorbestimmte Zeitspanne für die Menge elektrischer Energie eingestellt ist, die bei dem Gebäude (1) von dem elektrischen Energiesystem (30) empfangen ist, wobei der Preis in Entsprechung zu einer Menge elektrischer Energie definiert ist, die von dem elektrischen Energiesystem (30) geliefert ist, und erlangt wird, indem ein Preis einer Tarifeinheit mit der Menge elektrischer Energie multipliziert wird, die von dem elektrischen Energiesystem (30) geliefert ist;
Erlauben für eine Transaktionsmitwirkungseinheit (15), mit der Transaktionsvorrichtung (40) zu verhandeln, wenn ein erster Geldbetrag, der durch den Verbraucher empfangen ist, größer ist als ein zweiter Geldbetrag, als die Aufschlaggebühr, während der erste Zustand ausgewählt ist;
Empfangen, bei der Vorherberechnungseinheit (11) und von einer Messvorrichtung (31), eines Wertes elektrischer Energie, die durch die elektrische Last (2) in dem Gebäude (1) verbraucht ist;
Vorherberechnen, mittels der Vorherberechnungseinheit (11), einer Menge elektrischer Energie, die durch die elektrische Last (2) für eine erste Zeitspanne voraussichtlich verbraucht wird, auf der Grundlage einer Änderung der elektrischen Energie, die durch die Messvorrichtung (31) über die Zeit gemessen ist;
Speichern der Änderung elektrischer Energie, die durch die elektrische Last (2) mit der Zeit verbraucht wird, mittels einer Vorgeschichtespeichereinheit (111), die in der Vorherberechnungseinheit (11) enthalten ist, und Speichern, durch die Vorgeschichtespeichereinheit (111), der Menge elektrischer Energie, die der elektrischen Last (2) von einer elektrischen Speichereinrichtung (21) in der ersten Zeitspanne zusätzlich zu der Menge elektrischer Energie geliefert wird, die durch die elektrische Last (2) in der ersten Zeitspanne verbraucht ist; und
Einstufen eines Änderungsmusters elektrischer Energie in der ersten Zeitspanne auf der Grundlage einer Änderung elektrischer Energie, die in der Vorgeschichtespeichereinheit (111) gespeichert ist, mittels einer Einstufungseinheit (112), die in der Vorherberechnungseinheit (11) enthalten ist, und Extrahieren, mittels der Einstufungseinheit (112), des Änderungsmusters, bei dem die Menge elektrischer Energie in der ersten Zeitspanne den Grenzwert überschreitet, unter Verwendung des Änderungsmusters der in der Vorgeschichtespeichereinheit (111) gespeicherten Änderung der Menge elektrischer Energie über die Zeit und der Bedingung, dass der elektrischen Last (2) die elektrische Energie von der elektrischen Speichereinrichtung (21) zugeführt wird; und
Vorherberechnen, mittels der Vorherberechnungseinheit (11), der Menge elektrischer Energie, die voraussichtlich durch die elektrische Last (2) für die erste Zeitspanne verbraucht wird, durch ein Vergleichen der von der Messvorrichtung (31) empfangenen Änderung der elektrischen Energie über die Zeit mit dem Änderungsmuster, das durch die Einstufungseinheit (112) eingestuft ist, und Vorherberechnen mittels der Vorherberechnungseinheit (11), dass die Menge elektrischer Energie den Grenzwert in der ersten Zeitspanne überschreitet, durch ein Vergleichen des Änderungsmusters, das durch die Einstufungseinheit (112) extrahiert ist, mit dem Änderungsmuster, das anhand der durch die Messvorrichtung (31) gemessenen Änderung der elektrischen Energie extrahiert ist.

9. Von einem Computer auslesbares Medium, das Programmanweisungen speichert, die bei Ausführung durch den Computer bewirken, dass der Computer als das Leistungseinstellungssystem nach einem beliebigen der Ansprüche 1 bis 7 arbeitet.

## Revendications

1. Système de réglage de puissance qui est configuré de manière à traiter avec un dispositif de transaction (40), selon une condition de transaction, que de l'énergie électrique provenant d'une installation d'alimentation électrique (20) dans un bâtiment (1) d'un consommateur soit ou non fournie à un système d'alimentation électrique (30), le système de réglage de puissance comprenant :
une unité de prédiction (11) configurée de manière à prédire une énergie électrique qui doit être consommée par une charge électrique (2) dans le bâtiment (1) ;
un contrôleur (12) configuré de manière à sélectionner l'un quelconque parmi un premier état, dans lequel l'énergie électrique provenant de l'installation d'alimentation électrique (20) est fournie au système d'alimentation électrique (30), et un second état, dans lequel l'énergie électrique provenant de l'installation d'alimentation électrique (20) est fournie à la charge électrique (2) ;
une unité de calcul (14) configurée de manière à calculer une surtaxe à payer en plus d'un prix pour l'énergie électrique que le bâtiment (1) reçoit en provenance du système d'alimentation électrique (30) lorsque l'énergie électrique prédite par l'unité de prédiction (11) dépasse une valeur limite qui est définie sur la quantité d'énergie électrique pendant une période prédéterminée qui est reçue au niveau du bâtiment (1) en provenance du système d'alimentation électrique (30), le prix étant défini en fonction d'une quantité d'énergie électrique fournie par le système d'alimentation électrique (30), et étant obtenu par un prix unitaire facturé multiplié par la quantité d'énergie électrique fournie à partir du système d'alimentation électrique (30) ; et
une unité transactionnelle participante (15) configurée de manière à être autorisée à traiter avec le dispositif de transaction (40) lorsqu'une première somme d'argent reçue par le consommateur est supérieure à une seconde somme d'argent, en tant que la surtaxe, tandis que le premier état est sélectionné ;
dans lequel l'unité de prédiction (11) est configurée de manière à recevoir, à partir d'un dispositif de mesure (31), une valeur d'énergie électrique consommée par la charge électrique (2) dans le bâtiment (1), l'unité de prédiction (11) étant configurée de manière à prédire une quantité d'énergie électrique qui doit être consommée par la charge électrique (2) pendant une première période sur la base d'une variation de l'énergie électrique mesurée par le dispositif de mesure (31) au fil du temps ;
dans lequel l'unité de prédiction (11) inclut :
une unité de stockage historique (111) configurée de manière à stocker la variation de l'énergie électrique consommée par la charge électrique (2) au fil du temps, et à stocker la quantité d'énergie électrique fournie d'une installation de stockage électrique (21) à la charge électrique (2) au cours de la première période, outre la quantité d'énergie électrique consommée par la charge électrique (2) au cours de la première période ; et
une unité de classification (112) configurée de manière à classer un modèle de variation d'énergie électrique au cours de la première période, sur la base de la variation de l'énergie électrique stockée dans l'unité de stockage historique (111), et à extraire le modèle de variation, dans lequel la quantité d'énergie électrique au cours de la première période dépasse la valeur limite, en utilisant le modèle de variation de la variation de la quantité d'énergie électrique au fil du temps, laquelle est stockée dans l'unité de stockage historique (111), et la condition que l'énergie électrique soit fournie à la charge électrique (2) par l'installation de stockage électrique (21) ;
l'unité de prédiction (11) étant configurée de manière à prédire la quantité d'énergie électrique devant être consommée par la charge électrique (2) pendant la première période, en comparant la variation de l'énergie électrique reçue en provenance du dispositif de mesure (31) au fil du temps et le modèle de variation classé par l'unité de classification (112), et à prédire que la quantité d'énergie électrique au cours de la première période dépasse la valeur limite en comparant le modèle de variation extrait par l'unité de classification (112) au modèle de variation extrait de la variation de l'énergie électrique mesurée par le dispositif de mesure (31).

2. Système de réglage de puissance selon la revendication 1, dans lequel :
l'unité transactionnelle participante est configurée de manière à notifier au dispositif de transaction (40), lorsqu'elle est autorisée à traiter avec le dispositif de transaction, qu'une demande est mise en oeuvre avec la condition de transaction enregistrée dans le dispositif de transaction (40), l'unité transactionnelle participante (15) étant configurée de manière à recevoir, en provenance du dispositif de transaction (40), un résultat de détermination indiquant si un contrat est conclu ou non ; et
le contrôleur (12) est configuré de manière à sélectionner le premier état lorsque le contrat est conclu, le contrôleur (12) étant configuré de manière à sélectionner le second état de sorte que l'énergie électrique provenant du système d'alimentation électrique (30) ne dépasse pas la valeur limite sauf si le contrat est conclu.

3. Système de réglage de puissance selon la revendication 1 ou 2, dans lequel l'installation d'alimentation électrique (20) est une installation de stockage électrique (21) qui inclut une batterie de stockage (22) configurée de manière à être chargée avec l'énergie électrique en provenance du système d'alimentation électrique (30).

4. Système de réglage de puissance selon l'une quelconque des revendications 1 à 3, dans lequel l'unité transactionnelle participante (15) est configurée de manière à comparer une somme de la première somme d'argent à une somme de la seconde somme d'argent pendant une période prédéterminée pour laquelle une pluralité de transactions avec le dispositif de transaction est autorisée, l'unité transactionnelle participante (15) étant configurée de manière à notifier, au dispositif de transaction (40), qu'une demande est mise en oeuvre selon la condition de transaction enregistrée par le dispositif de transaction lorsque la somme de la première somme d'argent est supérieure à la somme de la seconde somme d'argent.

5. Système de réglage de puissance selon la revendication 4, dans lequel :
l'unité de calcul (14) inclut une unité d'acquisition d'accord (141) qui est configurée de manière à acquérir un accord qui définit la valeur limite, en communiquant avec un dispositif externe ;
l'unité de calcul (14) étant configurée de manière à calculer la somme de la seconde somme d'argent pour la période prédéterminée sur la base de l'accord acquis par l'unité d'acquisition d'accord (141).

6. Système de réglage de puissance selon l'une quelconque des revendications 1 à 5, dans lequel :
la condition de transaction contient une énergie électrique demandée, un prix par quantité unitaire d'énergie électrique, et une période pour laquelle une fourniture d'énergie électrique est demandée ; et
la première somme d'argent est calculée sur la base du prix par quantité unitaire d'énergie électrique et de l'énergie électrique qui est autorisée à être fournie à partir de l'installation d'alimentation électrique (20).

7. Système de réglage de puissance selon la revendication 4 ou 5, dans lequel l'unité de calcul (14) inclut une unité de définition de période (142) qui est configurée de manière à définir la période prédéterminée de manière variable.

8. Procédé de réglage de puissance pour traiter avec un dispositif de transaction, selon une condition de transaction, que de l'énergie électrique provenant d'une installation d'alimentation électrique (20) dans un bâtiment (1) d'un consommateur soit ou non fournie à un système d'alimentation électrique (30), le procédé de réglage de puissance comprenant les étapes ci-dessous consistant à :
prédire, au moyen d'une unité de prédiction (11), une énergie électrique qui doit être consommée par une charge électrique (2) dans le bâtiment (1) ;
sélectionner, au moyen d'un contrôleur (12), l'un quelconque parmi un premier état, dans lequel l'énergie électrique provenant de l'installation d'alimentation électrique (20) est fournie au système d'alimentation électrique (30), et un second état, dans lequel l'énergie électrique provenant de l'installation d'alimentation électrique (20) est fournie à la charge électrique (2) ;
calculer, au moyen d'une unité de calcul (14), une surtaxe à payer en plus d'un prix pour l'énergie électrique que le bâtiment reçoit en provenance du système d'alimentation électrique (30) lorsque l'énergie électrique prédite par l'unité de prédiction (11) dépasse une valeur limite qui est définie sur la quantité d'énergie électrique pendant une période prédéterminée qui est reçue au niveau du bâtiment (1) en provenance du système d'alimentation électrique (30), le prix étant défini en fonction d'une quantité d'énergie électrique fournie à partir du système d'alimentation électrique (30), et étant obtenu par un prix unitaire facturé multiplié par la quantité d'énergie électrique fournie à partir du système d'alimentation électrique (30) ; et
autoriser une unité transactionnelle participante (15) à traiter avec le dispositif de transaction (40) lorsqu'une première somme d'argent reçue par le consommateur est supérieure à une seconde somme d'argent, en tant que la surtaxe, tandis que le premier état est sélectionné ;
recevoir, au niveau de l'unité de prédiction (11), et en provenance d'un dispositif de mesure (31), une valeur d'énergie électrique consommée par la charge électrique (2) dans le bâtiment (1) ;
prédire, au moyen de l'unité de prédiction (11), une quantité d'énergie électrique qui doit être consommée par la charge électrique (2) pendant une première période sur la base d'une variation de l'énergie électrique mesurée par le dispositif de mesure (31) au fil du temps ;
stocker, au moyen d'une unité de stockage historique (111) incluse dans l'unité de prédiction (11), la variation de l'énergie électrique consommée par la charge électrique (2) au fil du temps, et stocker, par le biais de l'unité de stockage historique (111), la quantité d'énergie électrique fournie d'une installation de stockage électrique (21) à la charge électrique (2) au cours de la première période, outre la quantité d'énergie électrique consommée par la charge électrique (2) au cours de la première période de temps ; et
classer, au moyen d'une unité de classification (112) incluse dans l'unité de prédiction (11), un modèle de variation d'énergie électrique au cours de la première période, sur la base de la variation de l'énergie électrique stockée dans l'unité de stockage historique (111), et extraire, au moyen de l'unité de classification (112), le modèle de variation, dans lequel la quantité d'énergie électrique au cours de la première période dépasse la valeur limite, en utilisant le modèle de variation de la variation de la quantité d'énergie électrique au fil du temps, laquelle est stockée dans l'unité de stockage historique (111), et la condition que l'énergie électrique soit fournie à la charge électrique (2) par l'installation de stockage électrique (21) ; et
prédire, au moyen de l'unité de prédiction (11), la quantité d'énergie électrique devant être consommée par la charge électrique (2) pendant la première période, en comparant la variation de l'énergie électrique reçue en provenance du dispositif de mesure (31) au fil du temps et le modèle de variation classé par l'unité de classification (112), et prédire, au moyen de l'unité de prédiction (11), que la quantité d'énergie électrique au cours de la première période dépasse la valeur limite, en comparant le modèle de variation extrait par l'unité de classification (112) au modèle de variation extrait de la variation de l'énergie électrique mesurée par le dispositif de mesure (31).

9. Support lisible par ordinateur stockant des instructions de programme qui, lorsqu'elles sont exécutées par l'ordinateur, amènent l'ordinateur à fonctionner en tant que le système de réglage de puissance selon l'une quelconque des revendications 1 à 7.
